# EUROPEAN PATENT APPLICATION

(11) **EP 2 477 380 A1**
(43) Date of publication of application: **18.07.2012**
(21) Application number: 11188003.5
(22) Date of filing: 07.11.2011
(51) Int. Cl.: H04M 1/725, H04W 88/04

(54) **Apparatus and method for providing and executing content**

(30) Priority: 13.01.2011 KR 20110003721
(71) Applicant: Pantech Co., Ltd., Seoul (KR)
(72) Inventor: Lee, Woo-Young, Seoul (KR)
(74) Representative: Jordan, Volker Otto Wilhelm

(57) **Abstract**

An apparatus and method for providing and executing content are provided. The apparatus includes a controller to determine whether the content can be executed in the apparatus. If the content cannot be or does not desired to be executed in the apparatus, then an external apparatus may be sought to execute the content.

## Description

### CROSS-REFERENCE TO RELATED APPLICATION

This application claims priority from and the benefit under 35 U.S.C. §119(a) of Korean Patent Application No. 10-2011-0003721, filed on January 13, 2011, which is incorporated by reference for all purposes as if fully set forth herein.

### BACKGROUND

FIELD

The following description relates to an apparatus and a method for providing and executing content.

DISCUSSION OF THE BACKGROUND

Mobile communication terminals, such as smart phones, may generally support computing abilities, such as Internet communication and information retrieval, as well as voice communication. By using such mobile communication terminals, a user may download or retrieve content to use in real time.

However, such mobile communication terminals may generally have lower performance capability in terms of data processing speed and access to a high speed network in comparison to a typical computer. Thus, a user of the mobile communication terminal may not download content or an application that he or she wants with the same expediency as he or she may on a computer. Since the content or application may be downloaded via the lower-speed wireless communication network, external interruptions may occur during the downloading operation. If the external interruptions occur while the content or application is downloaded to the mobile communication terminal, the user may delete the content or application that may be incompletely downloaded and attempt to download the requested content or application again.

Also, even if the content or application is downloaded normally, the downloaded content or application may not be used on the mobile communication terminal due to a limitation of a battery life, or due to limitations of supportable hardware or software.

### SUMMARY

Exemplary embodiments of the present invention provide an apparatus and a method for providing and executing content.

Additional features of the invention will be set forth in the description which follows, and in part will be apparent from the description, or may be learned by practice of the invention.

Exemplary embodiments of the present invention provide an apparatus to provide content including a controller to determine whether the content can be executed, in which the content is received from a first external apparatus or obtained from a storage unit, to determine whether to execute the content in the apparatus or to identify a second external apparatus capable of executing the content, and to execute the content in the apparatus or the second external apparatus, in which the controller transmits content execution information about the content to the second external apparatus if the second external apparatus is determined to execute the content.

Exemplary embodiments of the present invention provide a method for executing content in an apparatus including obtaining content, in which the obtaining the content includes extracting the content from a content management and storage unit or receiving the content from a first external apparatus; obtaining execution condition information related to the content; obtaining content execution environment information related to the apparatus; analyzing the obtained content execution environment information with the execution condition information to obtain analysis result information; determining whether the content can be executed in the apparatus based on the analysis result information; and executing the content, in which the content is executed either in the apparatus or in a second external apparatus capable of executing the content.

Exemplary embodiments of the present invention provide a method for executing content including obtaining content for execution; obtaining execution condition information related to the content; identifying a second external apparatus capable of executing the content based on the execution condition information; and executing the content, in which the content is executed in at least one of the apparatus or the second external apparatus.

It is to be understood that both foregoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain aspects of the invention.

FIG. 1 is a block diagram illustrating an apparatus to provide content according to an exemplary embodiment of the invention.

FIG. 2 is a flowchart illustrating a method for executing content according to an exemplary embodiment of the invention.

FIG. 3A and FIG. 3B are flowcharts illustrating a method of determining an appropriate apparatus for executing a content in accordance with analysis result information according to an exemplary embodiment of the invention.

### DETAILED DESCRIPTION OF THE ILLUSTRATED EMBODIMENTS

The invention is described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure is thorough, and will fully convey the scope of the invention to those skilled in the art. It will be understood that for the purposes of this disclosure, "at least one of X, Y, and Z" can be construed as X only, Y only, Z only, or any combination of two or more items X, Y, and Z (e.g., XYZ, XZ, XYY, YZ, ZZ). Throughout the drawings and the detailed description, unless otherwise described, the same drawing reference numerals are understood to refer to the same elements, features, and structures. The relative size and depiction of these elements may be exaggerated for clarity, illustration, and convenience.

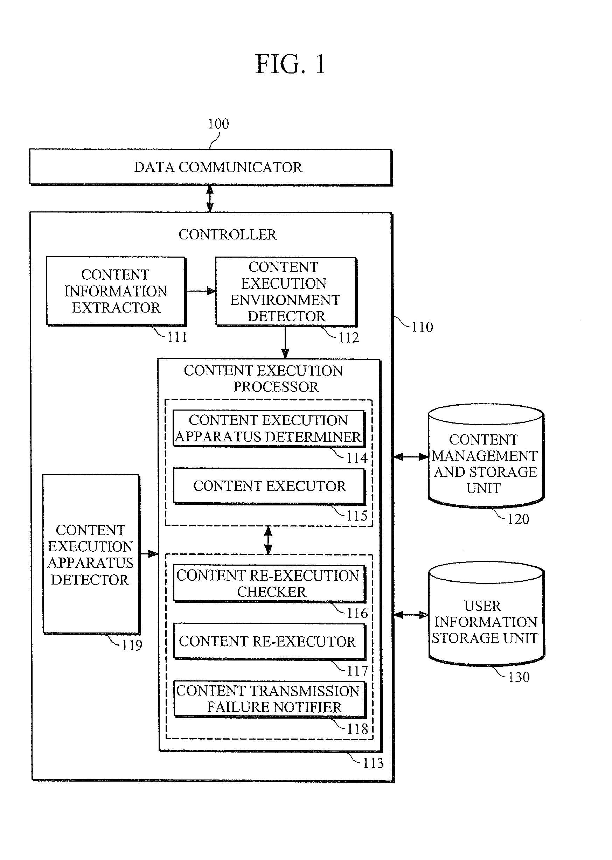

FIG. 1 is a block diagram illustrating an apparatus to provide content according to an exemplary embodiment of the invention.

As shown in FIG. 1, an apparatus to provide content includes a data communicator 100, a controller 110, a content management and storage unit 120, and a user information storage unit 130.

The data communicator 100 may perform data communication with one or more external apparatuses using a wireless communication. The data communicator 100 may receive content requested by a user from an external apparatus, such as a server, and/or transmit the content to the same or a different external apparatus, which may be capable of executing the content.

The controller 110 may determine whether the content received from the external apparatus, such as a server, can be executed, and control the received content to be executed. The received content may be executed in the apparatus and/or transmitted to the external apparatus capable of executing the content so that the external apparatus may execute the content. The external apparatus capable of executing the content may be the same or different from the external apparatus providing the content to the apparatus. In addition, the controller 110 may also determine whether the content may be compatible with the apparatus, prior to, during, and/or after receiving the content. The received content may be determined to be executed in the apparatus based on a user selection or one or more reference conditions (e.g., system limitation, battery life, user preference, content type, and the like).

As shown further in FIG. 1, the controller 110 includes a content information extractor 111, a content execution environment detector 112, a content execution processor 113, and a content execution apparatus detector 119. The controller 110 may interact with the content management and storage unit 120 and user information storage unit 130. Although the content management and storage unit 120 and the user information storage unit 130 are illustrated in FIG. 1 as a feature of the apparatus, aspects are not limited thereto such that the content management and storage unit 120 and/or the user information storage unit 130 may be external to the apparatus and/or accessible via a wired and/or wireless communication network.

The content information extractor 111 may receive the content requested by the user and extract execution condition information related to the received content. In addition, if the content is previously stored, the content information extractor 111 may extract execution condition information related to the content from the content management and storage unit 120. According to aspects of the invention, the content may include, without limitation, a motion picture, a game, a music file, a document, an image file, an executable application, and the like. Execution condition information may include, without limitation, system requirement information, cost information, capacity information, and other relevant information related to executing the content.

If the execution condition information is extracted, the content execution environment detector 112 may obtain content execution environment information related to the apparatus and compare the obtained content execution environment information with the execution condition information. Accordingly, analysis may be made based on this comparison result to provide analysis result information. The content execution environment information may include, without limitation, battery status information, wireless communication state information, hardware and software version information, and other related information related to the apparatus that may execute the content.

According to aspects of the invention, the content execution environment detector 112 may determine whether battery life and/or performance level for the wireless communication are sufficient to execute the content based on the execution condition information. By determining the sufficiency of the content execution environment information (e.g., battery life, wireless communication state information) against the execution condition information (e.g., system requirement information related to executing the content) the analysis result information may be obtained.

Ifthe analysis result information determines that the content execution environment information related to the apparatus is sufficient to meet the execution condition information related to the content, then the apparatus may execute the content itself. If the analysis result information determines that the content execution environment information related to the apparatus is not sufficient to meet the execution condition information related to the content, then the apparatus may search to identify an external apparatus capable of executing the respective content. If such external apparatus is identified, the apparatus may transmit the content to be executed by the identified external apparatus.

According to aspects of the invention, the content execution environment detector 112 may compare and/or analyze the system requirement information included in the execution condition information with the hardware and software version information included in the content execution environment information to determine whether the content can be executed by the apparatus. If the content to be executed is determined to be a motion picture, the content execution environment detector 112 may obtain an execution program to execute the motion picture content from the execution condition information. The control execution environment detector 112 may determine whether the execution program or an appropriate version of the execution program is installed in the apparatus to provide the analysis result information.

If the analysis result information is obtained, the content execution processor 113 3 may determine whether the content can be executed based on the obtained analysis result information. The content may be executed in the apparatus or an external apparatus. If the content is determined to be executed by the external apparatus, the content execution processor 113 may transmit content and/or execution condition information to the external apparatus capable of executing the content.

Further, the content execution processor 113 may obtain content execution information of the apparatus and/or external apparatus. The content execution information may include, without limitation, execution condition information, Uniform Resource Locator (URL) information of the external apparatus, content conversion request information and/or transmission request information to enable the apparatus to execute the content.

As shown further in FIG. 1, the content execution processor 113 includes a content execution apparatus determiner 114, a content executor 115, a content re-execution checker 116, content re-executor 117, and a content transmission failure notifier 118. If it is determined based on the obtained analysis result information that the content can be executed, the content execution apparatus determiner 114 may determine whether the apparatus or the external apparatus, which may be searched for by a content execution apparatus detector 119, will execute the content. The content execution apparatus detector 119 may search to identify an external apparatus (e.g., a personal computer (PC), a tablet PC, and a smart television (TV)) to which the content can be transmitted and executed. Accordingly, one or more external apparatuses may be identified to which the content can be transmitted.

If the external apparatus capable of executing the content is identified by the content execution apparatus detector 119, the content execution apparatus determiner 114 may determine whether the identified external apparatus or the apparatus will execute the content. If the external apparatus is determined to execute the content, a request to transmit the content to the external apparatus is made. More specifically, a content executor 115 may transmit the content execution information (e.g., URL information) related to the content to the external apparatus.

Ifthe content execution apparatus determiner 114 determines to execute the content in the apparatus, the content executor 115 may execute the content in the apparatus to provide the content. In addition, if it is determined that the apparatus will execute the content, the content executor 115 may determine whether a cost may be associated with executing the content. The determination of whether a cost may be associated with the execution of the content may be made according to the cost information included in the execution condition information. If the content executor 115 determines that a cost may be associated with executing the content, the content execution apparatus determiner 114 may provide the cost information associated with executing the content in the apparatus and the external apparatus. Then, the content execution apparatus determiner 114 may determine whether the apparatus or the external apparatus will execute the content based on the cost information. The determination on which apparatus may execute the content may be made according to a selection made by the user or according to one or more reference conditions.

If it is determined on the basis of the analysis result information that the content cannot be executed (or is not desired to be executed) in the apparatus, the content re-execution checker 116 may re-determine whether the content can be re-executed in the apparatus based on the analysis result information. If it is determined that the content can be re-executed, the content execution apparatus determiner 114 may select the apparatus to execute the content. Further, if it is determined that the content cannot be re-executed (or is not desired to be re-executed) in the apparatus, the content execution information may be transmitted to the external apparatus capable of executing the content, which may be searched for and identified by the content execution apparatus detector 119. The corresponding analysis result information may be stored in the content management and storage unit 120.

According to aspects of the invention, if the content re-execution checker 116 determines that the analysis result information, which may be obtained from the content execution environment detector 112, is related to a wireless communication fault, a content re-executor 117 may determine that there is a temporary execution fault and the content execution apparatus determiner 114 may select the apparatus to execute the content. If the content re-execution checker 116 determines from the analysis result information that a hardware or software version of the apparatus for providing content is outdated or incompatible to execute the content, the content re-executor 117 may determine that the content cannot be re-executed. As a result, the content re-executor 117 may transmits the content execution information to the external apparatus identified by the content execution apparatus detector 119.

If the external apparatus receiving the content execution information from the content re-executor 117 fails to execute the content according to the content execution information, the content transmission failure notifier 118 may output the corresponding content processing result information on a display screen of the apparatus, or transmit the content processing result information to the user using user's contact information, such as an email address. In an example, user's contact information may be included in user information stored in the user information storage unit 130. However, aspects of the present invention are not limited to this case, the content transmission failure notifier 118 may transmit the content processing result information to the user by other communication methods, including short message service (SMS), multimedia message service (MMS), and the like if the content fails to be executed by the content re-executor 117.

If an external apparatus capable of executing the content is not identified by the content execution apparatus detector 119, the content transmission failure notifier 118 may output the corresponding content processing result information on the screen, or transmit the content processing result information to the user's contact information. In an example, the content processing result information may be transmitted to the user by email, SMS, MMS, and other suitable communication technologies. The user's contact information may be stored in the user information storage unit 130.

In other words, if the content cannot be executed in the apparatus or in the external apparatus, the content transmission failure notifier 118 may output the corresponding content processing result information on the screen of the respective apparatus or external apparatus, or transmit the content processing result information to the user's contact information. The content processing result information may be transmitted to the user by email, SMS, MMS, and other suitable communication technologies. The user contact information may be stored in the user information storage unit 130. Thus, the user can know whether the content can be executed on the basis of the content processing result information outputted to be displayed on the screen of the apparatus. Also, the user can check the content processing result information received at his or her email address (or via SMS or MMS) and execute the content with reference to content information (e.g., the content URL information) included in the content processing result information.

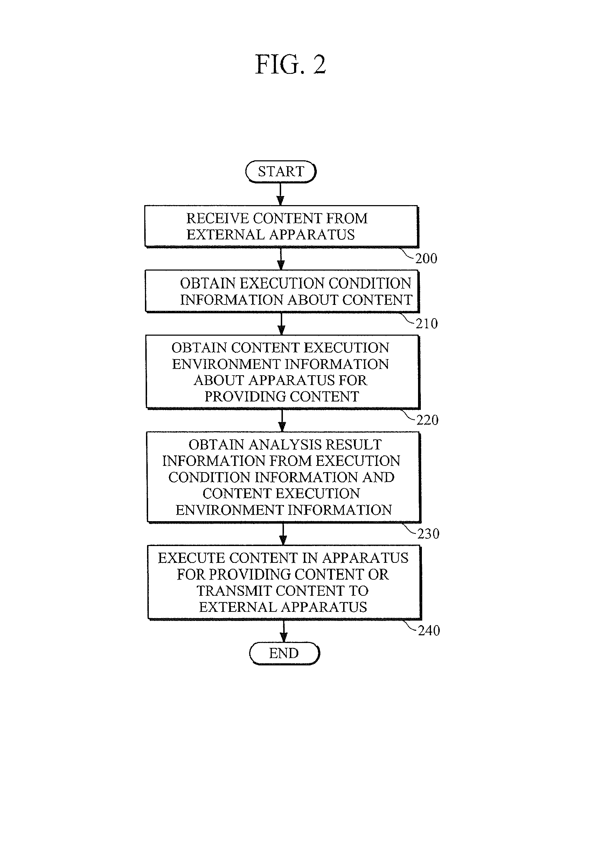

FIG. 2 is a flowchart illustrating a method for executing content according to an exemplary embodiment of the invention.

As shown in FIG. 2, an apparatus receives content from an external apparatus, such as a server, in operation 200. The apparatus may receive content through a communication network, such as a wireless communication network or a wired communication network. Although it is not illustrated, the apparatus may also extract stored content from a content management and storage unit 120 if the content is available.

In operation 210, the apparatus obtains execution condition information related to the content, which may be received from the server or extracted from the content management and storage unit. The content may include, without limitation, a motion picture, a game, a music file, a document, an image file, an executable application, and the like. Execution condition information may include, without limitation, system requirement information, cost information, capacity information, and other relevant information for executing the content.

Ifthe execution condition information related the content is extracted, the apparatus obtains content execution environment information related to the apparatus itself (operation 220). Further, the apparatus may obtain the content execution environment information at different points in time. For example, the apparatus may obtain execution environment information at a point in time when the execution condition information is extracted, and may also periodically obtain execution environment information before, during, or after the execution condition information is obtained. The content execution environment information may include, without limitation, battery status information, wireless communication state information, hardware and software version information, and other related information about the apparatus.

If the content execution environment information is obtained, the apparatus compares and/or analyzes the obtained content execution environment information with the execution condition information for obtaining the analysis result information (operation 230).

The apparatus may determine whether battery life included in the obtained content execution environment information is sufficient to execute the content or whether wireless communication is performing normally for obtaining the analysis result information. According to aspects of the invention, the apparatus may compare and/or analyze the system requirement information included in the execution condition information and software version information included in the content execution environment information for obtaining the analysis result information of whether the content can be executed.

If the analysis result information is obtained by comparing and/or analyzing the content execution environment information with the execution condition information, the apparatus may determine whether the content can be executed on the basis of the analysis result information. Further, the apparatus may determine whether the content can be executed in the apparatus itself or by an external apparatus capable of executing the content (operation 240). If the external apparatus is determined to execute the content, the content may be transmitted to the external apparatus for execution. The external apparatus that is identified or selected to execute the content may be the same or different than the external apparatus than the external apparatus that provided the content in operation 200.

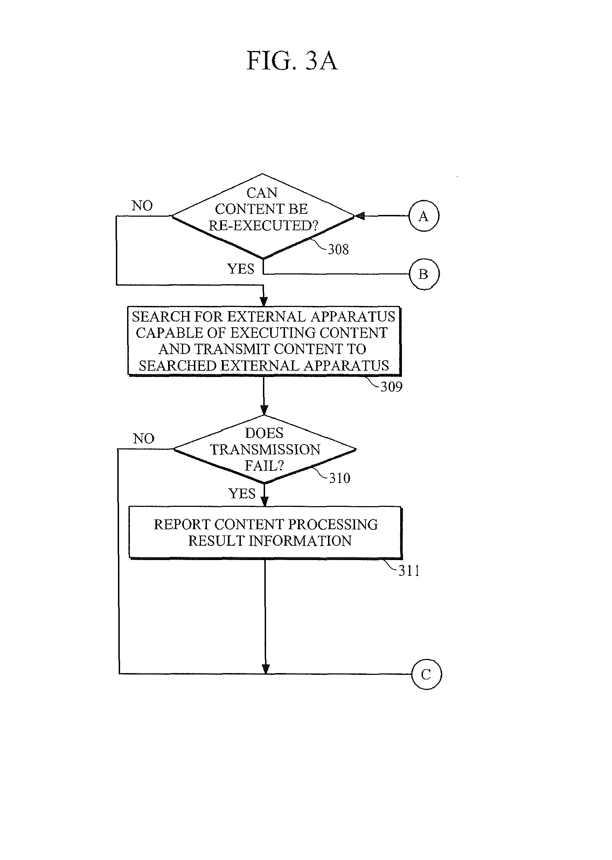

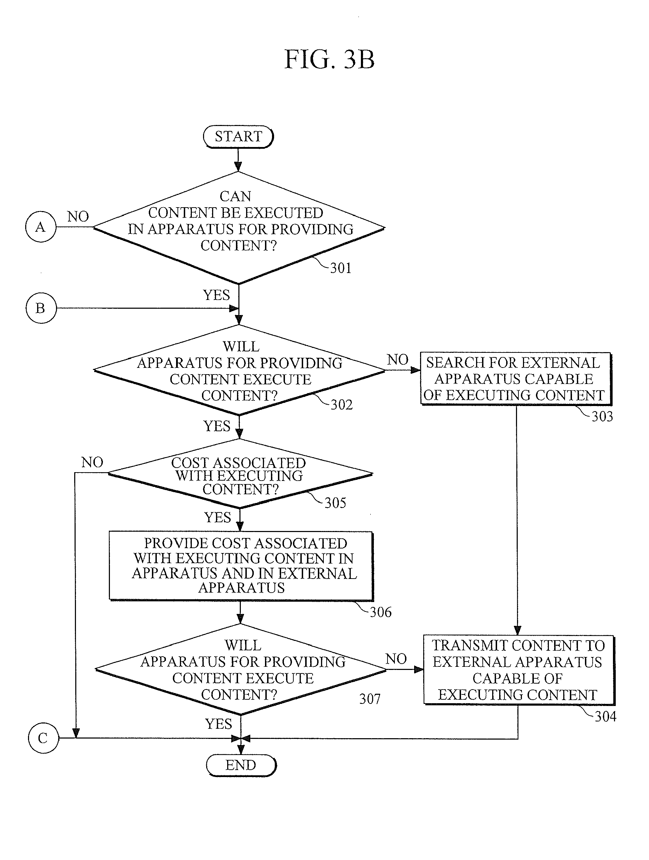

A method of determining whether the content can be executed and determining whether the content is to be executed in an apparatus or an external apparatus will be described below with reference to FIG. 3A and FIG. 3B.

FIG. 3A and FIG. 3B are flowchart diagrams illustrating a method of determining an appropriate apparatus for executing a content in accordance with analysis result information according to an exemplary embodiment of the invention.

As illustrated in the drawing, if analysis result information is obtained, the apparatus determines whether the corresponding content can be executed on the basis of the obtained analysis result information (operation 301). If it is determined that the content can be executed, the apparatus determines whether to execute the content in the apparatus itself or in an external apparatus (operation 302).

Ifthe content is determined that it can be executed, the apparatus may show a user a selection screen to select whether to execute the content in the apparatus or in an external apparatus. In addition, the selection of whether to execute the content in the apparatus or the external apparatus may be automatically made based on one or more reference conditions (e.g., processing time, application type, cost, and the like). However, for simplicity in disclosure, the method will be described using a user selection.

If the user selects the content to be executed in the external apparatus, the apparatus may search for an appropriate external apparatus capable of executing the content (operation 303). The external apparatus may be identified through the search process in operation 303. The apparatus may search for the appropriate external apparatus by using short-range communication or other network communication.

In operation 304, once the external apparatus capable of executing the content is identified, the apparatus transmits content execution information (e.g., execution condition information or URL information) for executing the content to the identified external apparatus. In addition, the apparatus may transmit content execution information, which may include content conversion request information and/or transmission request information, for enabling the apparatus to transmit the content to the identified external apparatus (operation 304). According to the received content execution information, the external apparatus receiving the content execution information executes the content, or converts the content to be executable in the apparatus and transmits the converted content to the apparatus. Thus, the user can execute the content in the external apparatus or the user's apparatus.

If the apparatus is selected to execute the content according to a user selection, the apparatus determines whether cost is associated in executing the content (operation 305). Determination of whether cost may be associated with executing the content may be made based on the execution condition information related to the content. If it is determined that cost is associated in executing the content, the apparatus provides cost information associated with executing the content in the apparatus and the external apparatus (operation 306). In operation 307, if it is determined by the user to execute the content after viewing the associated cost information, either the apparatus or the external apparatus may be selected to execute the content.

If the external apparatus is selected to execute the content, then the apparatus may transmit the content execution information to the external apparatus for execution of the content. In an example, the user may select the external apparatus to execute the content based on the provided cost information associated with executing the content in the apparatus and the external apparatus. Thus, the user may determine to execute the content on an apparatus or an external apparatus based on the cost to execute the content.

If it is determined on the basis of the analysis result information in operation 301 1 that the content cannot be executed, the apparatus determines whether the content can be re-executed on the basis of the analysis result information (operation 308). If it is determined that the content can be re-executed, the apparatus determines whether to execute the content in the apparatus or in an external apparatus through operation 302.

According to aspects of the invention, if the analysis result information is related to wireless communication fault, the apparatus may determine that there is a temporary execution fault and may cause the content to be re-executed. Accordingly, the apparatus may determine whether to re-execute the content in the apparatus or in an external apparatus through operation 302.

In operation 309, if it is determined that the content cannot be re-executed, the apparatus searches for an external apparatus capable of executing the content by a short-range communication or other network communication types (e.g., wired/wireless network communication). If an appropriate external apparatus is identified, the apparatus may transmit the content execution information to the identified external apparatus.

In operation 310, the apparatus determines whether the transmission of content execution information to the external apparatus was a success or a failure. If transmission of the content execution information to the external apparatus fails or if it is determined that there is no external apparatus capable of executing the content, the apparatus may determine that the transmission has failed. Further, once the transmission of the content execution information is determined to have failed, the apparatus outputs the corresponding content processing result information on its display screen, or transmits the content processing result information to the user. The content processing result information may be transmitted by using user's contact information stored in a user information storage. The user's contact information may include, without limitation, an e-mail address, Short Message Service (SMS), Multimedia Messaging Service (MMS), a chatting service and the like. Accordingly, the user can know whether the content can be executed based on the content processing result information.

Thus far, an apparatus to provide content and a method for executing content have been described. Exemplary embodiments of the invention will be described in more detail below through exemplary scenarios.

If the apparatus to provide content browses a web site through a wireless communication network, the browsing of the web site may be unstable due to instability of a network. In this case, the apparatus may determine a status of the wireless network for possible fault, and the apparatus may re-accesses the wireless network to browses the web site when the fault has been removed from the network. On the other hand, when re-access to the web site is prohibited due to a network fault, the apparatus may search to identify an external apparatus capable of browsing the web site by using a short-range communication (e.g., Bluetooth®, ZigBee®, ultrawideband® (UWB), and home networking). Once such external apparatus is identified, the apparatus may browse the web site through the external apparatus. More specifically, the apparatus may transmit URL information related to the web site to the external apparatus. The external apparatus may browse the web site using the received URL information, so that the user can use the requested web site requested by the user through the external apparatus.

Further, the apparatus may request re-transmission of URL information and the web site to the external apparatus capable of browsing the web site. In this case, the external apparatus may parse the web site accessed using the received URL information and transmit the parsed web site information back to the apparatus. The apparatus may receive the parsed web site information from the external apparatus and output the received information on a display of the apparatus so that the user can access the web site through the apparatus.

If re-access to the web site is prohibited due to a network fault, the apparatus may store the URL information transmitted by the user. Thereafter, if the network fault is repaired, the apparatus may ask the user whether to access the previously requested web site.

If an activation program to access to the web site requested by the user is not installed in the apparatus, the apparatus may transmit the URL information to an external apparatus with the activation program is installed. As a result, the user may access and use the web site through the external apparatus with the activation program using the URL information transmitted by the apparatus. Also, the apparatus may request the external apparatus to transmit content related to the web site back to the apparatus. The external apparatus in response may convert the requested content to be executable in the apparatus and transmit the converted content back to the apparatus. As a result, the apparatus may execute the web site content, which may normally require the activation program, even if the activation program may not be installed in the apparatus.

If the user requests the apparatus to execute multimedia content (e.g., motion pictures, music, documents, and photographs), the apparatus may not execute the multimedia content because of a deficiency in a required program. For example, if a required decoding program (e.g., a codec program) to execute a motion picture is not installed in the apparatus, the apparatus may search for an external apparatus in which the required decoding program is installed. If such external apparatus is identified, the apparatus may transmit the motion picture file to the identified external apparatus, so that the user can enjoy the motion picture through the external apparatus receiving the motion picture file. Also, the external apparatus may transmit the motion picture file to be converted so that the converted motion picture file may be executable in the apparatus. If the motion picture file is successfully converted, the converted file is transmitted back to the apparatus, and the apparatus may execute the motion picture file even if the program related to execution of the motion picture file may not installed in the apparatus.

If a call/SMS is received while the apparatus is showing the motion picture on the screen, the apparatus may transmit the currently-executed motion picture file to an external apparatus capable of executing the motion picture file, so that the user can enjoy the motion picture without interruption.

If the apparatus does not have an appropriate program for reading a document requested by the user or does not support a resolution for playing a motion picture, the apparatus may search for an external apparatus capable of reading the document or playing the motion picture at the resolution, and transmits the document file or the motion picture file to the identified external apparatus capable of executing the respective files. Accordingly, the user can read the document or enjoy the motion picture at the resolution through the external apparatus receiving the document file or the motion picture file.

As described above, according to aspects of the invention, content may be executed in an apparatus or an external apparatus. Further, the apparatus may request the external apparatus to convert the content into an executable file format that the converted file may be executed in the apparatus, thereby allowing the apparatus to execute the content without support of a program related to content execution.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

An apparatus and method for providing and executing content are provided. The apparatus includes a controller to determine whether the content can be executed in the apparatus. If the content cannot be or does not desired to be executed in the apparatus, then an external apparatus may be sought to execute the content.

## Claims

1. An apparatus to provide content, the apparatus comprising:
a controller to determine whether the content can be executed, the content being received from a first external apparatus or obtained from a storage unit, to determine whether to execute the content in the apparatus or to identify a second external apparatus capable of executing the content, and to execute the content in the apparatus or the second external apparatus,
wherein the controller transmits content execution information about the content to the second external apparatus if the second external apparatus is determined to execute the content.

2. The apparatus of claim 1, wherein the controller comprises:
a content information extractor to extract execution condition information related to the content;
a content execution environment detector to obtain content execution environment information related to the apparatus, and to obtain analysis result information,
wherein the analysis result information is obtained by analyzing the content execution environment information with the extracted execution condition information; and
a content execution processor to determine whether the content can be executed based on the analysis result information, and to execute the content or to transmit the content execution information to the second external apparatus;
wherein the controller preferably further comprises a content execution apparatus detector to identify the second external apparatus capable of executing the received content.

3. The apparatus of claim 2, wherein the content execution processor comprises:
a content execution apparatus determiner to determine whether the apparatus or the second external apparatus will execute the content; and
a content executor to transmit the content execution information to the second external apparatus or to execute the content in the apparatus based on the determination result of the content execution apparatus determiner.

4. The apparatus of claim 3, wherein, if the content is determined to be executed in the apparatus, the content executor determines whether a cost is associated with executing the content based on the execution condition information, and
if a cost is associated with executing the content, the content execution apparatus determiner obtains cost information for the apparatus and the second external apparatus, and determines whether the apparatus or the second external apparatus will execute the content according to the cost information of the apparatus and the second external apparatus.

5. The apparatus of one of claims 2 to 4, wherein the content execution processor further comprises:
a content re-execution checker to determine whether the content can be re-executed based on the analysis result information if the content cannot be executed; and
a content re-executor to cause the content execution apparatus determiner to select the apparatus to execute the content if the content re-execution checker determines that the content can be re-executed, and to transmit the content execution information to the second external apparatus and store the analysis result information in a content management and storage unit if the content re-execution checker determines that the content is to be re-executed in the second external apparatus.

6. The apparatus of claim 5, wherein the content execution processor further comprises a content transmission failure notifier to output content processing result information on a display screen of the apparatus, if the second external apparatus fails to execute the content.

7. The apparatus of claim 5 or 6, wherein the content execution processor further comprises a content transmission failure notifier to transmit the content processing result information to a user using user's contact information stored in a user information storage unit, if the second external apparatus fails to execute the content.

8. The apparatus of one of claims 1 to 7, further comprising a data communicator to receive content from the first external apparatus using a wireless communication network.

9. The apparatus of one of claims 1 to 8, wherein the controller transmits content execution information about the content to the first external apparatus to execute the content;
or/and
wherein the content execution environment information comprises battery information, wireless communication state information, hardware version information, and software version information related to the apparatus;
or/and
wherein the content comprises at least one of a motion picture file, a game file, a music file, a document file, an image file, and an application executable in the apparatus;
or/and
wherein the execution condition information comprises at least one of system requirement information, cost information, and capacity information for executing the content.

10. A method for executing content, comprising:
obtaining content for execution;
obtaining execution condition information related to the content; at least one of
a) determining whether the content can be executed in an apparatus and
b) identifying an external apparatus capable of executing the content based on the execution condition information; and
executing the content, wherein the content is executed in at least one of the apparatus or the external apparatus;
wherein the execution condition information preferably comprises at least one of system requirement information, cost information, and capacity information for executing the content.

11. A method, preferably according to claim 10, for executing content in an apparatus, the method comprising:
obtaining content, wherein the obtaining the content comprises extracting the content from a content management and storage unit or receiving the content from a first external apparatus;
obtaining execution condition information related to the content;
obtaining content execution environment information related to the apparatus;
analyzing the content execution environment information with the execution condition information to obtain analysis result information;
determining whether the content can be executed in the apparatus based on the analysis result information; and
executing the content, wherein the content is executed either in the apparatus or in a second external apparatus capable of executing the content;
wherein the content execution environment information preferably comprises at least one of battery information, wireless communication state information, hardware version information, and software version information related to the apparatus.

12. The method of claim 11, wherein the executing of the content comprises:
determining whether the content can be executed;
determining whether to execute the content in the apparatus or in the second external apparatus, wherein:
if it is determined that the second external apparatus will execute the content, identifying the second external apparatus capable of executing the content, and transmitting content execution information to the identified second external apparatus, and
if it is determined that the apparatus will execute the content, determining whether cost information is associated with executing the content based on the execution condition information, and providing the cost information associated with executing the content in the apparatus and the second external apparatus; and
executing the content, wherein the content is executed either in the apparatus or in the second external apparatus transmitting the content execution information to the second external apparatus.

13. The method of claim 12, wherein the determination of whether the content is executed in the apparatus or in the second external apparatus is based on the provided cost information.

14. The method of claim 12 or 13, further comprising re-executing the content, wherein the re-executing the content comprises:
determining whether the content was successfully executed;
determining whether the content can be re-executed based on the analysis result information; and
determining whether to re-execute the content in the apparatus or the second external apparatus if it is determined that the content can be re-executed, and identifying the second external apparatus capable of executing the content and transmitting the content execution information to the second external apparatus if it is determined that the content cannot be re-executed in the apparatus.

15. The method of one of claims 12 to 14, wherein the executing the content comprises, if the second external apparatus fails to execute the content according to the content execution information, providing a result of content processing result information,
wherein providing the result of the content processing result information comprises outputting the corresponding content processing result information on a display screen of the apparatus, or transmitting the content processing result information to a user using the user's contact information stored in a user information storage.
